# EUROPEAN PATENT APPLICATION

(11) **EP 2 552 060 A1**
(43) Date of publication of application: **30.01.2013**
(21) Application number: 11759390.5
(22) Date of filing: 22.03.2011
(51) Int. Cl.: H04L 12/56

(54) **INFORMATION SYSTEM, CONTROL APPARATUS, METHOD OF CONTROLLING VIRTUAL NETWORK, AND PROGRAM**

(30) Priority: 24.03.2010 JP 2010068900
(71) Applicant: NEC Corporation, Tokyo 108-8001 (JP)
(72) Inventor: NISHIMURA, Kouichi, Tokyo 108-8001 (JP)
(74) Representative: Robson, Aidan John
(86) International application number: PCT/JP2011/056842
(87) International publication number: WO 2011/118585

(57) **Abstract**

An information system, a control device, a method of managing a virtual network and a program are provided, whereby it is possible to identify a virtual network affected by a change in the state of a forwarding node, without causing flow in the virtual network. The information system includes a plurality of forwarding nodes provided with a packet processing unit that performs processing of a received packet using a processing rule conforming to the received packet; and a control device that causes the plurality of forwarding nodes to operate as a virtual network by setting a processing rule in the forwarding nodes. The control device is provided with a virtual network path information storage unit that stores a correspondence relationship between the virtual network and a forwarding path configured by the forwarding nodes; and a virtual network control unit that identifies a virtual network that is affected by a change in a state of any forwarding node among the plurality of forwarding nodes, by referring to the virtual network path information storage unit.

## Description

### TECHNICAL FIELD

### (Reference to Related Application)

This application is based upon and claims the benefit of priority of Japanese Patent Application No. 2010-068900, filed on March 24, 2010, the disclosure of which is incorporated herein in its entirety by reference thereto.

The present invention relates to an information system, a control device, a method of managing a virtual network, and a program, and in particular relates to an information system, a control server, a method of managing a virtual network, and a program, that provide a virtual network.

### BACKGROUND

Attention is being focused on the concept of a programmable flow switch by which flow control functions (control planes) implemented in network equipment, such as a switch router, are separated, and a control server performs integrated control of a network including the flow control functions, computers and storage.

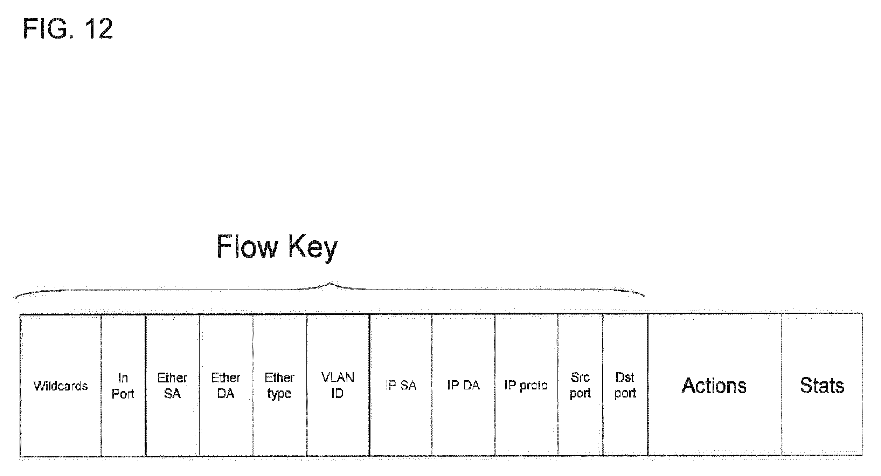

Technology known as OpenFlow is proposed as a programmable flow switch, as disclosed in Non-Patent Literatures 1 and 2. In OpenFlow, communication is taken as end-to-end flow, and path control, recovery from failure, load balancing, and optimization are performed in flow units. An OpenFlow switch functioning as a forwarding node operates in accordance with a flow table for which appropriate addition or rewriting is prescribed by the OpenFlow controller, via a secure channel for communication with the OpenFlow controller. In the flow table are definitions of sets of rules (FlowKey, matching key) that refer to packet headers, actions (Actions) defining processing content, and flow statistical information (Stats), for each flow (refer to Fig. 12).

Fig. 13 shows an example of actions names and action contents defined in Non-Patent Literature 2. OUTPUT is an action to output a packet to a designated port (interface). From SET_VLAN_VID to SET_TP_DST are actions to modify a field of a packet header.

For example, on receiving a first packet, the OpenFlow switch searches for an entry having a rule (FlowKey) that matches header information of the received packet, from the flow table. As a result of the search, in a case where an entry matching the received packet is found, the OpenFlow switch implements processing content described in an action field of the entry in question, with regard to the received packet. On the other hand, as a result of the search, in a case where an entry matching the received packet is not found, the OpenFlow switch transmits the received packet to an OpenFlow controller via the secure channel, requests determination of a packet path based on source and destination of the received packet, receives a flow entry realizing this, and updates the flow table.

### CITATION LIST

### NON-PATENT LITERATURE

[Non-Patent Literature 1]
   Nick McKeown, and 7 others, "OpenFlow: Enabling Innovation in Campus Networks", [online] [search conducted February 26, 2010] Internet URL: <http://www.openflowswitch.org//documents/openflow-wp-latest.pdf>
[Non-Patent Literature 2]
   "OpenFlow Switch Specification" Version 0.9.0 (Wire Protocol 0x98) [search conducted February 26, 2010] Internet URL: <http://www.openflowswitch.org/documents/openflow-spec-v0.9.0.pdf>

### SUMMARY

### TECHNICAL PROBLEM

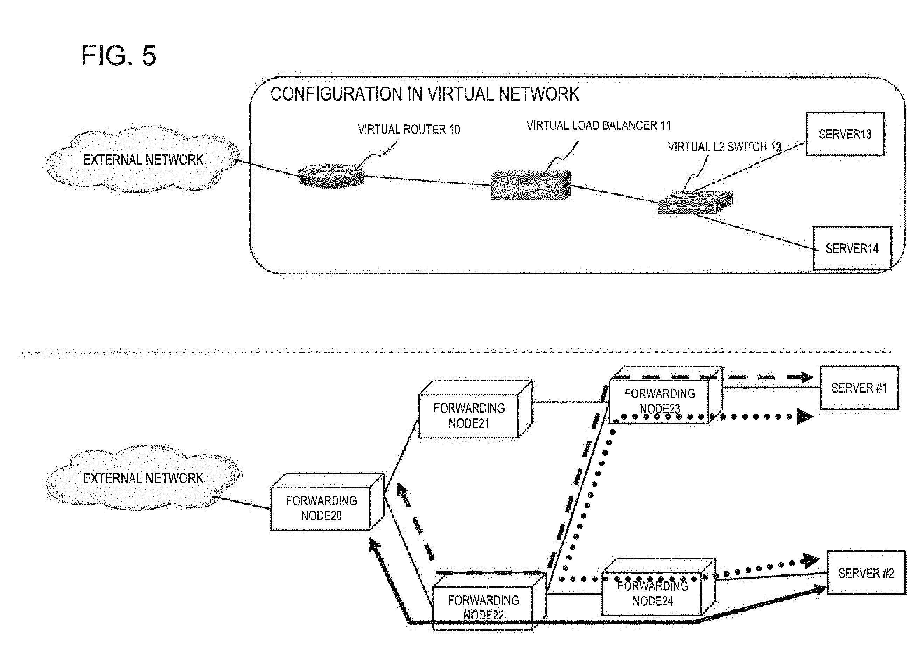

The entire disclosures of the abovementioned Non-Patent Literatures 1 and 2 are incorporated herein by reference thereto. The following analysis is given according to the present inventors. Using the technology described in the abovementioned Non-Patent Literatures 1 and 2, by setting flow entries where forwarding nodes 20 to 24 shown in the lower part of Fig. 5 behave as router, load balancer, and layer 2 switch, it is possible to build a virtual network shown in the upper part of the same drawing. One virtual network is shown in the upper part of Fig. 5, but by setting suitable flow entries in accordance with respective packet contents, according to the technology described in Non-Patent Literatures 1 and 2 mentioned above, it is possible to build a separate superimposed virtual network.

However, in the technology described in the abovementioned Non-Patent Literatures 1 and 2, even if a state change such as a failure in some of the forwarding nodes is detected, there is a problem in that this stops at modification of actual physical topology and re-setting of an accompanying flow entry, and it is not possible to identify which virtual network will be affected thereafter. For example, in a case where a link between forwarding node 22 and forwarding node 23 in the lower part of Fig. 5 is interrupted, comprehension of the physical topology modification is possible, but it is difficult to distinguish which virtual network is affected by this change. As a result, it is not possible to provide correct information such as which virtual network is affected by the failure, to a user who is attempting to access a server #1 and a server #2 from an external network.

Furthermore, consideration may be given to a method of identifying a failure or the like in a virtual network by periodically generating flow in the virtual network, but there is a problem in that this method not only causes extra flow entries to be held in respective forwarding nodes, but also increases load.

The present invention has been made in view of the abovementioned situation, and the invention provides an information system, a control device, a method of managing a virtual network, and a program, whereby it is possible to identify a virtual network affected by a change in the state of a forwarding node, without causing flow in the virtual network.

### SOLUTION TO PROBLEM

According to a first aspect of the present invention there is provided an information system, comprising: a plurality of forwarding nodes provided with a packet processing unit that performs processing of a received packet using a processing rule conforming to the received packet; and a control device that causes the plurality of forwarding nodes to operate as a virtual network by setting a processing rule in the forwarding nodes. The control device comprises: a virtual network path information storage unit that stores a correspondence relationship between the virtual network and a forwarding path configured by the forwarding nodes; and a virtual network control unit that identifies a virtual network that is affected by a change in a state of any forwarding node among the plurality of forwarding nodes, by referring to the virtual network path information storage unit.

According to a second aspect of the present invention there is provided a control device, connected to a plurality of forwarding nodes provided with a packet processing unit that performs processing of a received packet using a processing rule conforming to the received packet. The control device comprises: a virtual network control unit that causes the plurality of forwarding nodes to operate as a virtual network, by setting a processing rule in the forwarding nodes; and a virtual network path information storage unit that stores a correspondence relationship between a forwarding path configured by the forwarding nodes and the virtual network; wherein a virtual network that is affected by a change in a state of any forwarding node among the plurality of forwarding nodes is identified by referring to the virtual network path information storage unit.

According to a third aspect of the present invention there is provided a method of managing a virtual network, wherein a control device, connected to a plurality of forwarding nodes having a packet processing unit that performs processing of a received packet using a processing rule conforming to the received packet, and having a virtual network path information storage unit that stores a correspondence relationship between a virtual network realized by setting a processing rule in the forwarding nodes and a forwarding path configured by the forwarding nodes. The control device comprises performing: a step of receiving a notification of a change in a state of a forwarding node in question from any forwarding node among the plurality of forwarding nodes, and a step of identifying a virtual network that is affected by a change in a state of the forwarding node, by referring to the virtual network path information storage unit. The present method is linked to a specific apparatus known as a control device, which sets a processing rule in accordance with a request from a forwarding node.

According to a fourth aspect of the present invention there is provided a program, that executes on a computer configuring a control device. The control device is connected to a plurality of forwarding nodes provided with a packet processing unit that performs processing of a received packet using a processing rule conforming to the received packet; and the control device comprises a virtual network path information storage unit that stores a correspondence relationship of a virtual network realized by setting a processing rule in the forwarding nodes and a forwarding path configured by the forwarding nodes, the program executing: a process of receiving a notification of a change in a state of a forwarding node in question from any forwarding node among the plurality of forwarding nodes; and a process of identifying a virtual network that is affected by a change in a state of the forwarding node, by referring to the virtual network path information storage unit. It is to be noted that the program can be recorded on a computer readable storage tedium. That is, the present invention can be embodied as a computer program product.

### ADVANTAGEOUS EFFECTS OF INVENTION

According to the present invention, it is possible to identify a virtual network affected by a change in the state of a forwarding node, without causing flow in the virtual network. A reason for this is that the invention is configured so that the control device stores correspondence relationships between the virtual network and forwarding paths configured by the forwarding nodes, to enable identification of a virtual network that is affected, through notification of a change in a state from a forwarding node.

### BRIEF DESCRIPTION OF THE DRAWINGS

Fig. 1 is a diagram for describing an outline of the present invention;
Fig. 2 is a diagram showing a configuration of a first exemplary embodiment of the present invention;
Fig. 3 is a block diagram showing a configuration of a forwarding node in the first exemplary embodiment of the invention;
Fig. 4 is a block diagram showing a configuration of a control device in the first exemplary embodiment of the invention;
Fig. 5 is an example of a virtual network provided by a configuration of Fig. 1;
Fig. 6 is a diagram for describing information stored in a virtual network identification information storage unit of the control device of the first exemplary embodiment of the invention;
Fig. 7 is a diagram for describing information stored in a virtual network path information storage unit of the control device of the first exemplary embodiment of the invention;
Fig. 8 is a diagram for describing information stored in a physical topology information storage unit of the control device of the first exemplary embodiment of the invention;
Fig. 9 is a sequence diagram representing operation of the first exemplary embodiment of the invention;
Fig. 10 is an example of a correspondence relationship of a failure occurrence location in a physical topology and a failure occurrence location in a virtual network;
Fig. 11 is a diagram showing a configuration of a control device in a third exemplary embodiment of the invention;
Fig. 12 is a diagram representing a configuration of an entry set in a flow table of an OpenFlow switch of Non-Patent Literatures 1 and 2; and

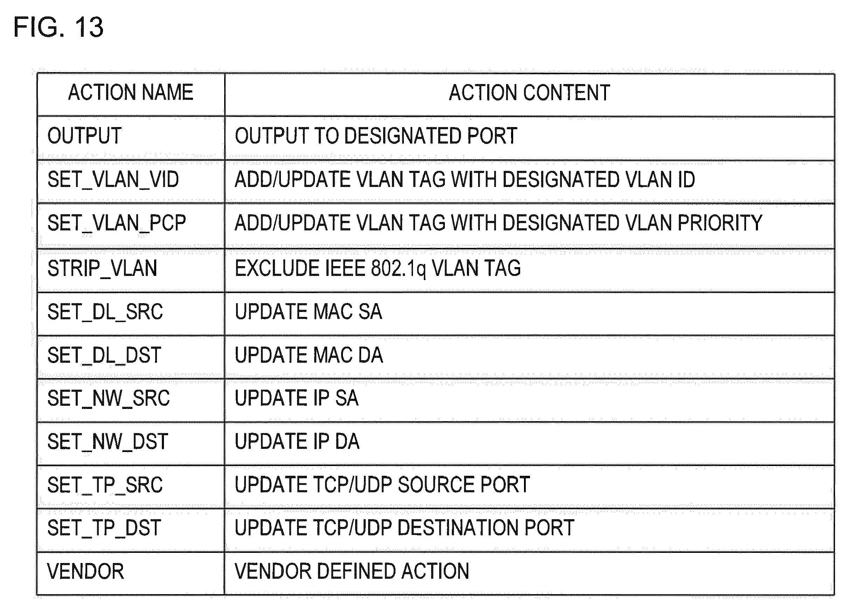

Fig. 13 is a diagram showing action names and action contents described in Non-Patent Literature 2.

### MODES

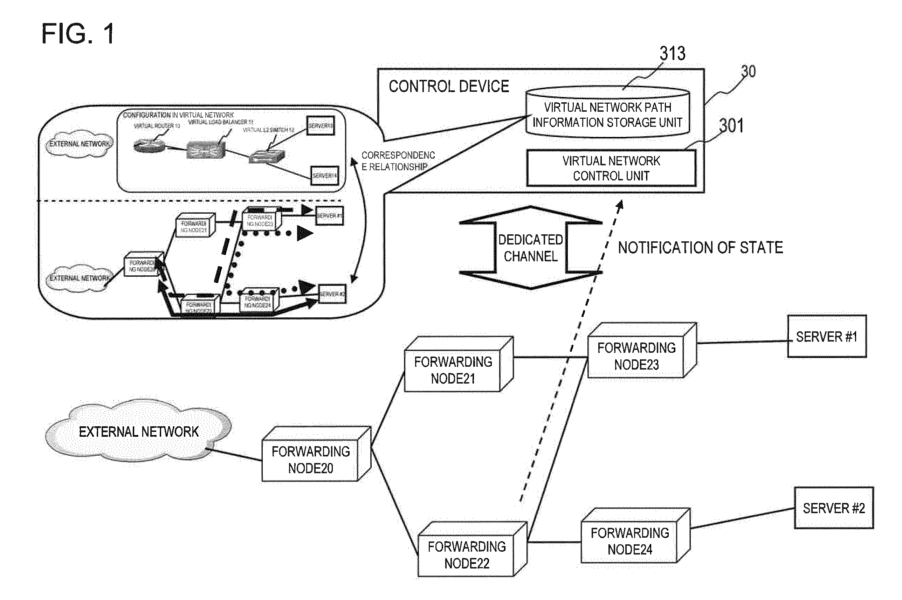

First a description is given of an outline of the present invention. Drawing reference symbols attached to this outline, as below, are examples solely for aiding understanding, and are not are intended to limit the invention to modes of the drawings shown. An information system according to the present invention, as shown in Fig. 1, is configured to include a plurality of forwarding nodes (20 to 24 in Fig. 1) that perform processing of a received packet by using a processing rule conforming to a received packet, and a control device (30 in Fig. 1) that causes the plurality of forwarding nodes to operate as a virtual network, by setting processing rules in the forwarding nodes.

The control device (30 in Fig. 1) is provided with a virtual network path information storage unit (313 in Fig. 1) to store correspondence relationship(s) between the virtual network and forwarding paths configured by the forwarding nodes; and a virtual network control unit (301 in Fig. 1) to identify a virtual network that is affected by a change in a state of any forwarding node among the plurality of forwarding nodes, by referring to correspondence relationships between paths of the virtual network and forwarding path(s) configured by the forwarding nodes.

In a case of receiving notification that a failure has occurred in a link with another forwarding node (for example, 23 in Fig. 1) from any forwarding node (for example, 22 in Fig. 1), the control device (30 in Fig. 1) identifies a virtual network associated with a forwarding path including a link where the failure has occurred, from the virtual network path information storage unit. Information of the virtual network identified in this way is used in management of the virtual network and in giving notification to a user who is using the virtual network. It is to be noted that, according to content thereof, an Echo protocol under "5.5 Symmetric Messages" of Non-Patent Literature 2, or an LLDP (Link Layer Discovery Protocol) can be used as a method of obtaining state information of the forwarding node.

### (First Exemplary Embodiment)

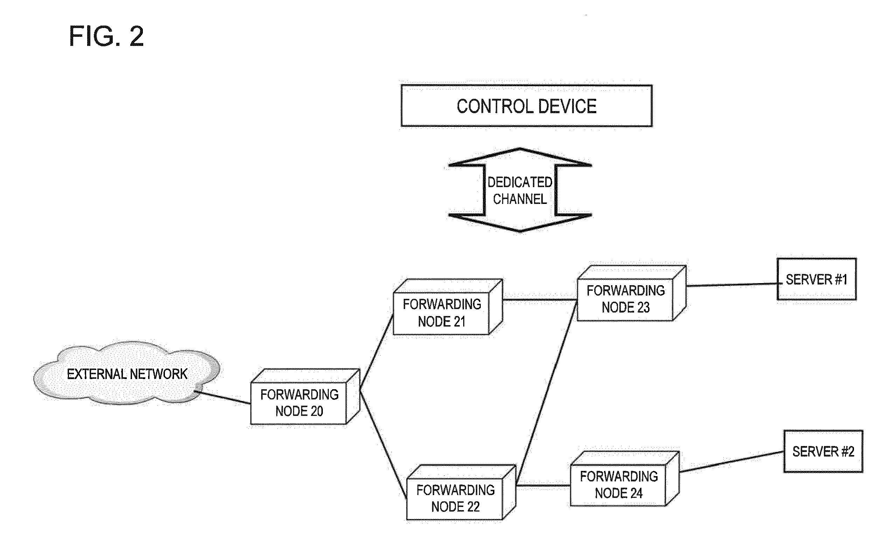

Next, a detailed description is given concerning a first exemplary embodiment of the present invention, making reference to the drawings. Fig. 2 is a diagram representing a configuration of the first exemplary embodiment of the invention. Fig. 2 shows a plurality of forwarding nodes 20 to 24 that are provided with a packet processing unit that performs processing of a received packet using a processing rule conforming to the received packet, and a control device 30 that makes the plurality of forwarding nodes 20 to 24 operate as a virtual network, by setting a processing rule in each of the forwarding nodes 20 to 24 via a dedicated channel.

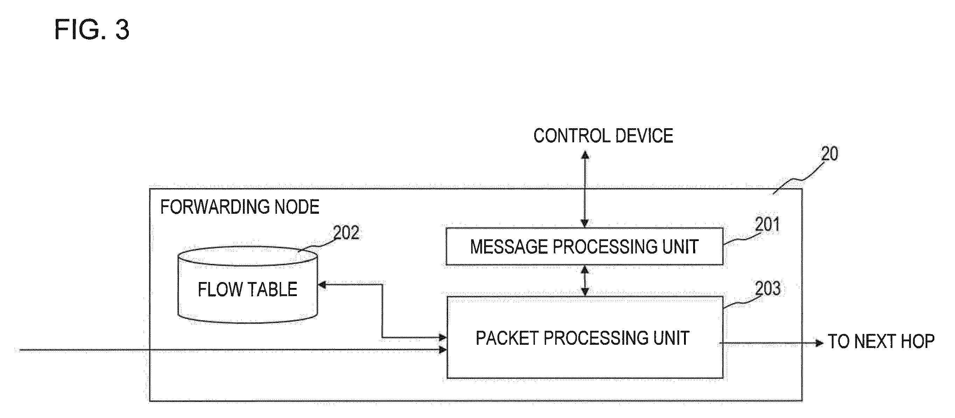

Fig. 3 is a block diagram representing a configuration of the abovementioned forwarding node 20. Fig. 3 shows a configuration of the forwarding node provided with a message processing unit 201 that performs communication with the abovementioned control device 30, and a packet processing unit 203 that selects a flow entry (processing rule) conforming to a received packet, from among flow entries (processing rules) stored in a flow table 202, to perform packet processing. Furthermore, the packet processing unit 203 performs an operation of registering a flow entry (processing rule) created in the control device 30, in the flow table 202, in accordance with an instruction from the control device 30.

The message processing unit 201 gives notification of the state of its own device to the control device 30, at arbitrary timing such as when a request is received from the control device 30.

It is to be noted that the forwarding nodes 20 to 24 described above can also be realized by an OpenFlow switch as in Non-Patent Literatures 1 and 2.

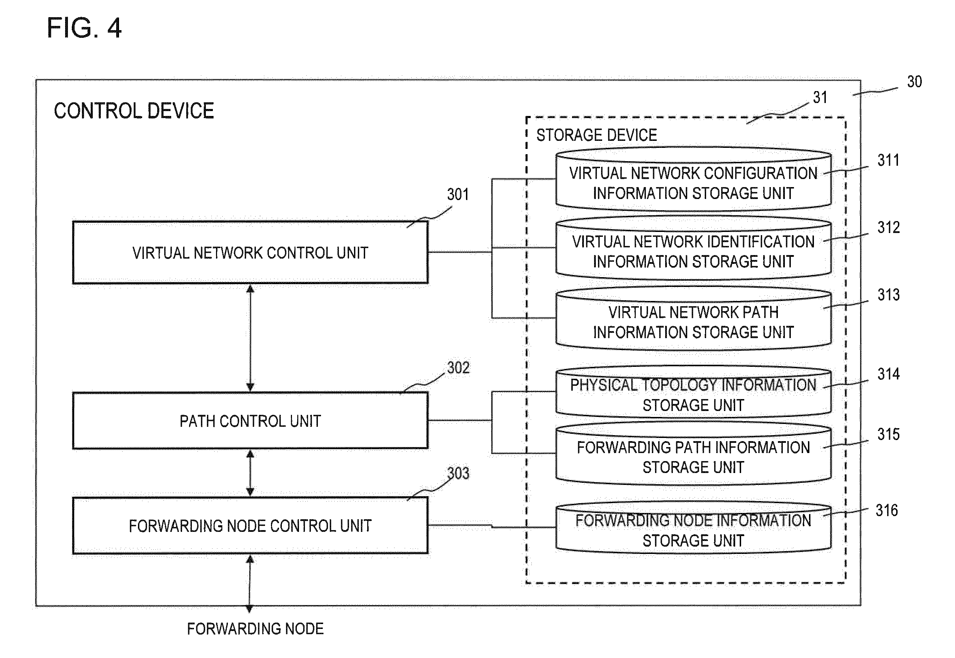

Fig. 4 is a block diagram showing a configuration of the control device 30. Fig. 4 shows a configuration provided with a virtual network control unit 301, a path control unit 302, a forwarding node control unit 303, and a storage device 31 that functions as a storage unit to store information described later.

A virtual network configuration information storage unit 311, a virtual network identification information storage unit 312, a virtual network path information storage unit 313, a physical topology information storage unit 314, a forwarding path information storage unit 315, and a forwarding node information storage unit 316 are provided in the storage device 31 of the control device 30.

The virtual network configuration information storage unit 311 is configured by a table or the like, which describes connection relationships between nodes (virtual nodes) in a virtual network. This type of virtual network configuration information storage unit 311 can be realized, for example, by a table storing connection relationships (connection relationships of virtual interfaces) between a virtual router 10, a virtual load balancer 11, a virtual L2 switch 12, and servers 13 and 14, in a virtual network in the upper part of Fig. 5, for each virtual network. Furthermore, using information read from this virtual network configuration information storage unit 311, it is possible to provide a configuration of a network exemplified in the upper part of Fig. 5, to a user.

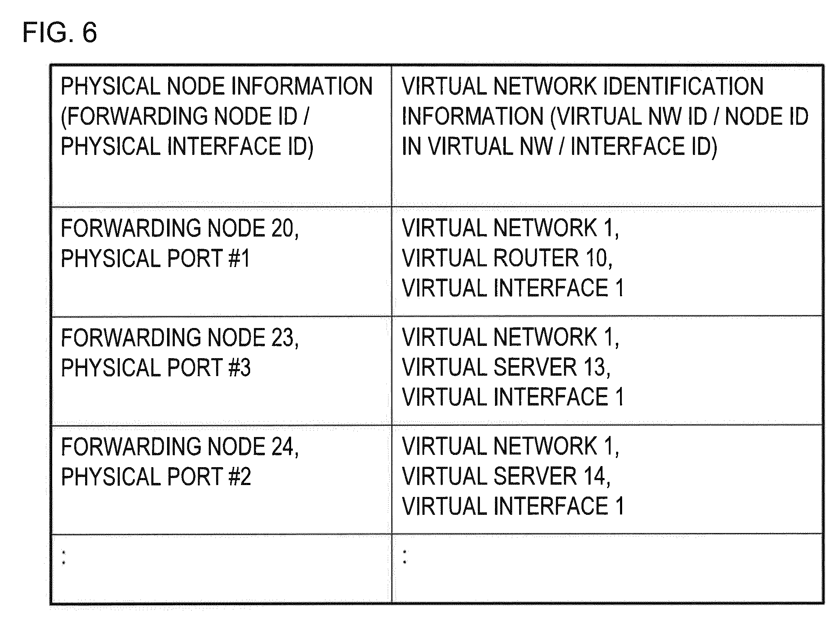

The virtual network identification information storage unit 312 is configured by a table that stores which physical interfaces of which forwarding node, among the forwarding nodes 20 to 24, are correspondent with virtual nodes and their virtual interfaces of each of the abovementioned virtual networks. Fig. 6 shows an example of a table used as the virtual network identification information storage unit 312, and virtual networks, virtual nodes, and virtual interfaces can be obtained from the physical node information in fields on the left side.

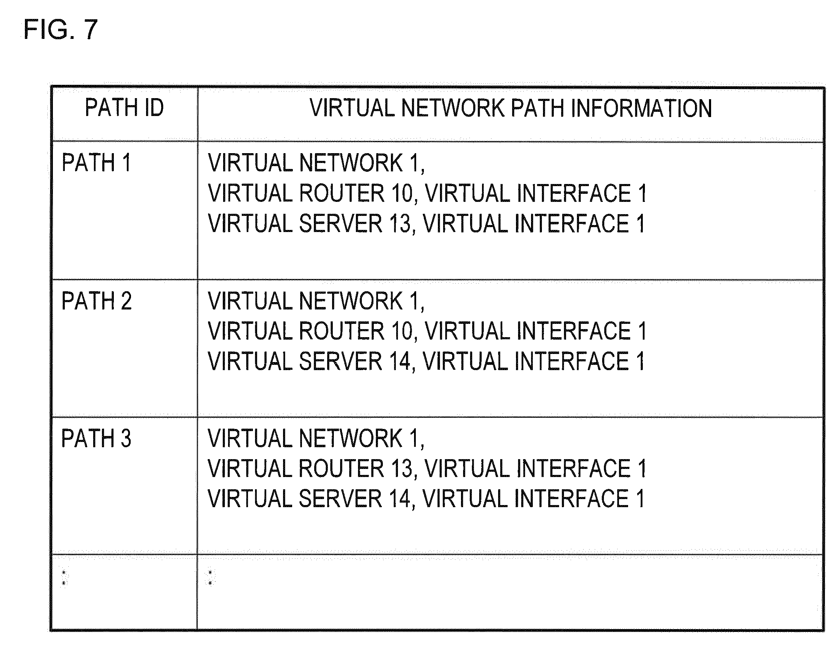

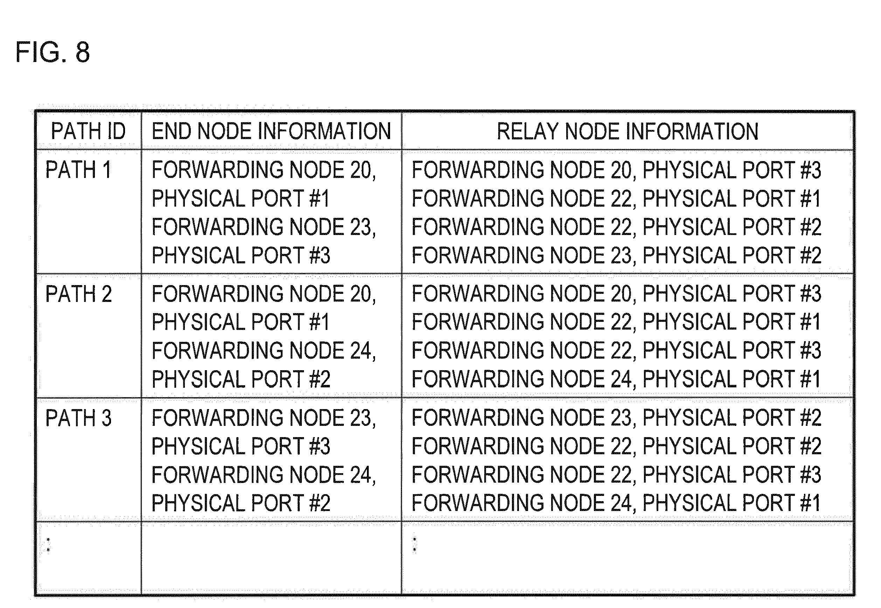

The virtual network path information storage unit 313 is configured by a table or the like, which associates forwarding paths according to the forwarding nodes 20 to 24, with respect to all combinations of virtual nodes connected to an external network or servers #1 and #2, in the virtual networks. Fig. 7 shows an example of a table used as the virtual network path information storage unit 313, with a description of which forwarding path, according to the forwarding nodes 20 to 24, corresponds to a path (path in a virtual network) set in advance between the virtual router 10, the virtual server 13, and the virtual server 14, that are end points of the virtual network. For example, a path on a virtual network, with a virtual interface 1 of the virtual router 10 of a virtual network 1 in Fig. 7 as a start point, and a virtual interface 1 of a virtual server 13 as an end point, corresponds to path 1 in Fig. 7 and Fig. 8.

It is to be noted that a correspondence relationship of a forwarding path according to forwarding nodes 20 to 24, with a path in the abovementioned virtual network can be acquired by a method of referring to the virtual network identification information storage unit 312 to obtain information of physical nodes respectively corresponding to virtual nodes that are end points of the virtual network, and pass the physical node information thereof to the path control unit 302, to obtain information of a path created using the forwarding nodes 20 to 24.

The physical topology information storage unit 314 is configured by a table or the like, which represents connection relationships (network topology / physical topology information) of the forwarding nodes 20 to 24.

The forwarding path information storage unit 315 is realized by a table or the like, which stores path information created using physical topology information stored in the physical topology information storage unit 314. Fig. 8 shows an example of a table used as the forwarding path information storage unit 315, and for each forwarding path there is a description of connection relationships of forwarding nodes that are end points, and respective physical ports (physical interfaces) of forwarding nodes that are at relay positions. It is to be noted that, instead of the connection relationships of the respective physical ports (physical interfaces) of the forwarding nodes, it is also possible to give respective identifiers to links between the forwarding nodes and to represent forwarding paths by these link identifiers.

For example, path 1 is a path of a packet having physical port #1 of the forwarding node 20 and physical port #3 of the forwarding node 23 as end points, and a packet inputted from the physical port #1 of the forwarding node 20 is outputted from the physical port #3 of the forwarding node 20, and inputted to the physical port #1 of the forwarding node 22. Below, forwarding takes place between forwarding nodes in the same way, and after being inputted to the physical port #2 of the forwarding node 23, a packet is finally outputted from physical port #3 of the forwarding node 23.

It is to be noted that in the present exemplary embodiment, the path information stored in the forwarding path information storage unit 315 is stored as long as forwarding node and physical port of an end node information field are present in the physical topology information storage unit 314. It is also possible to use a mode in which this path information is stored as a cache for a prescribed time only.

The forwarding node information storage unit 316 is realized by a table or the like, which stores a configuration and state information of each of the forwarding nodes 20 to 24.

The virtual network control unit 301 receives configuration change requests for a virtual network, in addition to providing virtual network configuration information to a user or manager of a virtual network, based on the virtual network configuration information storage unit 311.

The virtual network control unit 301 refers to the virtual network identification information storage unit 312 to obtain path information according to the forwarding nodes 20 to 24, corresponding to paths between virtual nodes that are end points of the virtual network, and to register the path information in the virtual network path information storage unit 313. Furthermore, on receiving notification that a change has occurred in a forwarding path from the path control unit 302, the virtual network control unit 301 searches in a table of the virtual network path information storage unit 313 and identifies a virtual network that is affected.

The path control unit 302 refers to physical network topology information stored in the physical topology information storage unit 314, calculates a forwarding path between any two forwarding nodes, and stores this in the forwarding path information storage unit 315.

On receiving notification (a state change notification) that the state of a forwarding node has changed, from the forwarding node control unit 303, the path control unit 302 updates the physical network topology information of the physical topology information storage unit 314. The path control unit 302 re-calculates a forwarding path for forwarding the packet to a destination, based on the updated physical network topology information, and stores this in the forwarding path information storage unit 315.

It is to be noted that in the present exemplary embodiment, with regard to the calculation of the respective forwarding paths, a shortest hop forwarding path is calculated using Dijkstra's method or the like. Therefore, according to the state change notification from a forwarding node, when a change occurs in the physical network topology information, a change may occur in a forwarding path. In this case, the path control unit 302 gives a notification that a change has occurred in a forwarding path to the virtual network control unit 301.

On receiving a forwarding path from the path control unit 302, the forwarding node control unit 303 refers to the forwarding node information storage unit 316, creates a flow entry (processing rule) implementing a created forwarding path, and sets (transmits) this with respect to the forwarding nodes 20 to 24.

The forwarding node control unit 303 receives configuration information and state information of forwarding nodes and physical ports thereof, from the forwarding nodes 20 to 24, stores these in the forwarding node information storage unit 316, and gives notification to the path control unit 302. For example, on receiving a link down notification with regard to a physical port from a forwarding node, the forwarding node control unit 303 gives notification that there is a link down with regard to the physical port of the forwarding node in question, to the path forwarding unit 302. In this way, the forwarding node control unit 303 is provided with a function to detect the occurrence of a failure of the forwarding nodes 20 to 24 and a recovery therefrom, and to give notification to the path control unit 302.

It is to be noted that the control device 30 as described above can also be realized by a configuration in which the abovementioned respective functions are added to the OpenFlow controller of Non-Patent Literatures 1 and 2.

Furthermore, respective parts (processing means) of the control device 30 shown in Fig. 4 can also be realized by a computer program that causes the abovementioned respective processing to be executed in a computer forming the control device 30, using information of the abovementioned storage device 31.

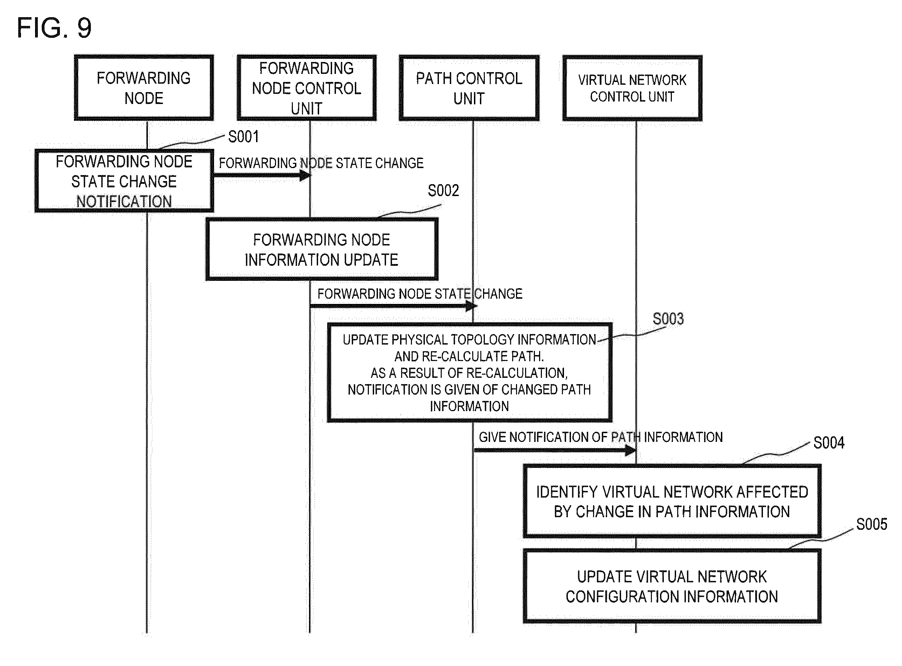

Next, a detailed description is given concerning operation of the present exemplary embodiment, making reference to the drawings. Fig. 9 is a sequence diagram representing operation of the first exemplary embodiment of the present invention. As shown in Fig. 9, when a certain forwarding node #1 detects a state change such as a physical port link up and link down, or a communication disconnection with the control device 30, a notification is given that a change has occurred in the state of a forwarding node, to the forwarding node control unit 303 of the control device 30 (step S001: "forwarding node state change notification"). It is to be noted that the state change due to the communication disconnection with the control device 30 can be detected by detecting that communication with the forwarding node by the forwarding node control unit 303 of the control device 30 has been disconnected.

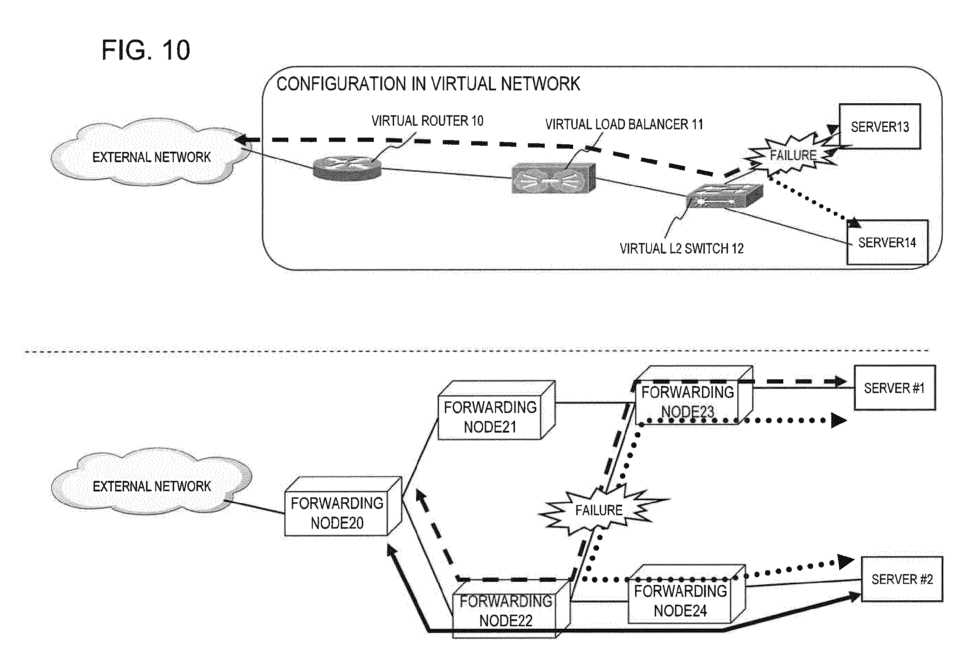

Here, a description is given where a failure has occurred in a link between the forwarding node 22 and the forwarding node 23 in the lower part of Fig. 10. In this case, for example, the forwarding node 22 gives notification with the content that there is a port link down (physical port #2) to the forwarding node control unit 303 of the control device 30.

The forwarding node control unit 303 of the control device 30, which has received the notification, updates the physical node information stored in the forwarding node information storage unit 316 based on the received notification of the state change of the forwarding node, and forwards the notification of the state change of the forwarding node to the path control unit 302 (step 5002).

As a result of the updating, the state of the physical port #2 of the forwarding node information storage unit 316 is updated to a down state.

The forwarding control unit 302 updates the physical topology information stored in the physical topology information storage unit 314 based on the received notification of the state change of the forwarding node. Moreover, the path control unit 302 performs path re-calculation of a path affected by the updating of the physical topology information based on the updated physical topology information, and updates the path information stored in the forwarding path information storage unit 315.

The path that has been affected can be identified by searching for a path including a forwarding node where there has been a state change and its physical port, from a relay node information field in path information (Fig. 8) stored in the forwarding path information storage unit 315. For example, where there is a notification of a port link down in physical port #2 of the forwarding node 22 in Fig. 10, when a search is made for a path including the physical port #2 of the forwarding node 22, from the relay node information field in the path information (Fig. 8) stored in the forwarding path information storage unit 315, a path 1 (broken line) and a path 3 (dotted line) are extracted.

In a case where it has not been possible to re-calculate a path for the path that is affected by the updating of the physical topology information, and in a case where, as a result of the re-calculation, a change has occurred in a path, the path control unit 302 gives notification of path information that has changed, to the virtual network control unit 301 (step S003).

For example, with regard to path 1 (broken line) and path 3 (dotted line) of Fig. 10, in a case where, as a result of performing path re-calculation, it is calculated that no alterative path exists, the path control unit 302 determines that there is a failure (a disconnected state) with respect to path 1 and path 3, and gives notification that path 1 (broken line) and path 3 (dotted line) have failed (disconnected state), to the virtual network control unit 301.

Furthermore, as a result of performing a path re-calculation for path 1 (broken line) and path 3 (dotted line) of Fig. 10, with regard to path 1 (broken line) for example, in a case where an alternative path of forwarding node 20, forwarding node 21 and forwarding node 23 is calculated, the path control unit 302 gives a notification that path 1 (broken line) has changed to a path which is the alternative path of forwarding node 20, forwarding node 21 and forwarding node 23, to the virtual network control unit 301.

The virtual network control unit 301 that receives the notification refers to a table (Fig. 7) stored in the virtual network path information storage unit 313, and identifies a virtual network, virtual nodes, and virtual interfaces related to the path produced by the change (step S004).

In a description with the virtual network configuration shown in Fig. 10, by receiving notification that a change has occurred in path 1 and path 3, from the path control unit 302, the virtual network control unit 301 identifies, from the table (Fig. 7) stored in the virtual network path information storage unit 313, that a change has occurred in a path between a virtual interface 1 of the virtual router 10 and a virtual interface 1 of the virtual server 13 in the virtual network 1, and a path between a virtual interface 1 of the virtual server 13 and a virtual interface 1 of the virtual server 14 of the virtual network 1, as virtual network paths affecting path 1 and path 3.

Furthermore, the virtual network control unit 301 updates virtual port and virtual node states in virtual network configuration information stored in the virtual network configuration information storage unit 311 (step S005). For example, in a case where path 1 and path 3 fail due to a port link down in physical port #2 of the forwarding node 22 described above, and it is not possible to calculate an alternative path, it is possible to make a presentation to the user, using content of the virtual network configuration information storage unit 311 that has been updated, as shown in the upper part of Fig. 10.

As described above, according to the present exemplary embodiment, it is possible to identify the virtual network that is affected by a failure occurring in the physical network, and furthermore to identify which link between forwarding nodes is affected within the virtual network, and to present this to the user.

A reason for this is that the configuration is such as to provide the virtual network path information storage unit that stores correspondence relationships between forwarding paths configured by forwarding nodes and a virtual network provided by the forwarding paths, and to enable identification of failure and recovery in the virtual network, without actually waiting for packet forwarding.

In the present exemplary embodiment, there is an advantage in that high speed processing is possible in comparison to a method of identifying a failure in the virtual network by the occurrence of a communication failure by transmitting a test packet or the like based on the virtual network. A reason for this is that a configuration is used where it is possible to identify the virtual network by searching for a path based on physical topology, rather than by transmitting a large amount of test packets and identifying the virtual network.

### (Second Exemplary Embodiment)

Next, a description is given concerning a second exemplary embodiment of the present invention, which can be implemented with a configuration approximately the same as the first exemplary embodiment. In the first exemplary embodiment a description was given in which forwarding paths according to forwarding nodes 20 to 24 are associated with respective paths combining virtual nodes that are end points in a virtual network, to be stored in a virtual network path information storage unit 313 of a control device 30 of Fig. 4. In contrast to this, in the second exemplary embodiment, when communication is generated in a virtual network, a virtual network control unit 301 obtains information for a path between forwarding nodes corresponding to virtual nodes at the start point and end point of communication in the virtual network, and associates the obtained path information with the virtual network path information, to be stored in the virtual network path information storage unit 313.

In a case where there is no longer communication using a path in the virtual network (communication has been completed) or a timeout has occurred due to the elapse of a certain fixed time, the virtual network control unit 301 in the present exemplary embodiment deletes path information corresponding to the completed communication and virtual network path information, from the virtual network path information storage unit 313.

As described above, in the second exemplary embodiment of the invention, in a case where a path in the virtual network is not used, there may be a case where it is not possible to identify a virtual network that is affected by a change in the state of a forwarding node, but it is possible to speed up processing to specify a virtual network because there are less entries held in the virtual network path information storage unit 313.

### (Third Exemplary Embodiment)

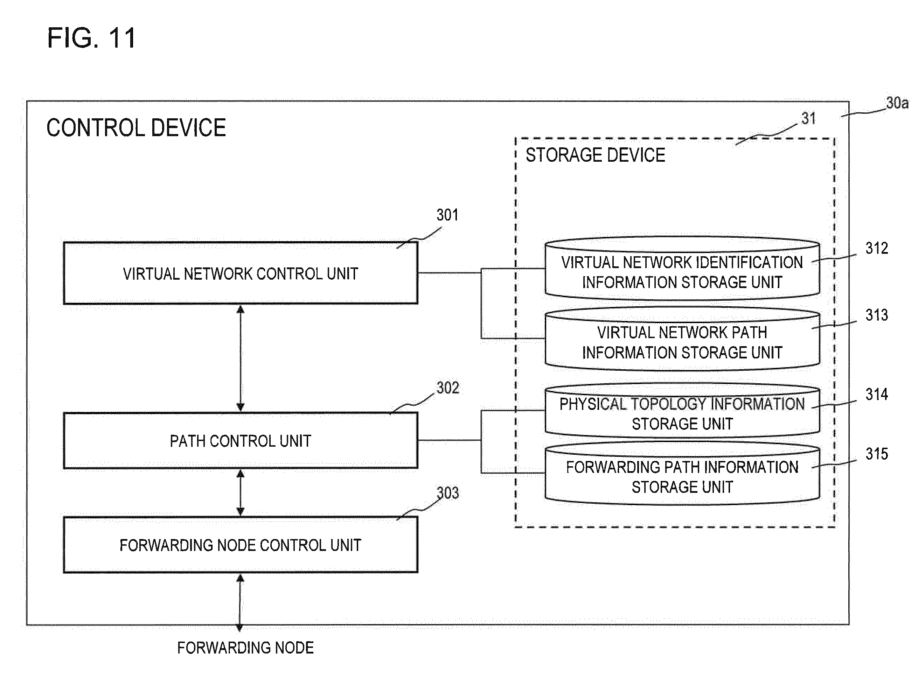

Next, a description is given concerning a third exemplary embodiment of the present invention, in which a modification is added to a configuration of a control device 30 of the first exemplary embodiment. Fig. 11 is a block diagram representing a configuration of a control device of the third exemplary embodiment of the invention.

Fig. 11 shows a configuration of a control device 30a in which a virtual network configuration information storage unit 311 and a forwarding node information storage unit 316 are omitted from the configuration of the control device 30 of Fig. 4.

The control device 30a of Fig. 11 can operate similarly to the control device 30 of the first and second exemplary embodiments, and can realize an effect similar to the abovementioned first and second exemplary embodiments by transmitting information of a virtual network affected by a change in the state of a forwarding node, to another information processing device.

A description has been given above of preferable exemplary embodiments of the present invention, but the present invention is not limited to the abovementioned exemplary embodiments, and further modifications, substitutions and adjustments can be added, within a scope that does not depart from fundamental technological concepts of the invention.

For example, in the abovementioned exemplary embodiments a description was given where the virtual network path information storage unit 313 and the forwarding path information storage unit 315 are each separated, but it is also possible to use a configuration where the two are merged.

In the abovementioned exemplary embodiments a description was given where one virtual network having paths 1 to 3, shown as an example in Fig. 5, is set, but besides that, it is also possible to identify a virtual network affected by a change in the state of a forwarding node, according to a procedure similar to a case where a plurality of virtual networks are set.

In addition, although a description was omitted in the abovementioned first exemplary embodiment, as a result of performing a re-calculation of a path affected by a change in the state of a forwarding node, in a case where it was possible to calculate an alternative path, this fact can be reflected in a virtual network configuration information storage unit 311, and to give notification to the user of the fact that a switch has been made to the alternative path in question, and of an effect due to switching to the alternative path.

It is to be noted that each disclosure of the abovementioned non-patent literatures is incorporated herein by reference. Modifications and adjustments of exemplary embodiments are possible within the bounds of the entire disclosure (including the scope of the claims) of the present invention, and also based on fundamental technological concepts thereof. Furthermore, a wide variety of combinations and selections of various disclosed elements is possible within the scope of the claims of the present invention. That is, the present invention clearly includes every type of transformation and modification that a person skilled in the art can realize according to the entire disclosure including the scope of the claims and to technological concepts thereof.

Finally, preferred modes of the present invention are summarized.

### (First Mode)

### (Refer to the information system according to the first aspect described above.)

### (Second Mode)

With respect to the information system according to the first mode, an information system, wherein the control device further comprises a forwarding path information storage unit that stores a connection relationship of a physical interface of each forwarding node in a forwarding path configured by the forwarding nodes; and the virtual network control unit retrieves a forwarding path including a physical interface of a forwarding node where a change in a state has occurred, by referring to the forwarding path information storage unit, and identifies a virtual network corresponding to the retrieved forwarding path, by referring to the virtual network path information storage unit.

### (Third Mode)

With respect to the information system according to the first or second mode, an information system wherein the control device further comprises a physical topology information storage unit that stores physical topology information representing connection relationships of the forwarding nodes; and a path control unit that calculates a path between any forwarding nodes, by referring to the physical topology information; and wherein the path control unit updates the physical topology information based on content of a change in a state received from the forwarding nodes, in addition to re-calculating a forwarding path configured by the forwarding nodes based on the physical topology information after updating, and as a result of the re-calculation, in a case where a change has occurred in a forwarding path configured by the forwarding nodes, causes the virtual network control unit to identify the virtual network.

### (Fourth Mode)

With respect to the information system according to the third mode, an information system wherein the control device further comprises a virtual network identification information storage unit that associates the plurality of forwarding nodes and physical interfaces thereof, and virtual nodes in a virtual network and virtual interfaces thereof; and the virtual network control unit refers to the virtual network identification information storage unit when communication occurs in the virtual network, to obtain forwarding nodes corresponding to a start point and an end point of the communication, and physical interfaces thereof, respectively; and a path created using the forwarding nodes corresponding to the start point and the end point of the communication and the physical interfaces thereof is associated with the virtual network in which the communication has occurred, to be registered in the virtual network path information storage unit.

### (Fifth Mode)

With respect to the information system according to the first to fourth modes, an information system wherein the virtual network control unit deletes an entry in question from the virtual network path information storage unit, at an occasion when communication is completed or when a prescribed time has elapsed.

### (Sixth Mode)

With respect to the information system according to the first to fifth modes, an information system device, wherein a correspondence relationship between a path in a virtual network and a forwarding path configured by the forwarding nodes is stored in the virtual network path information storage unit, and the virtual network control unit identifies a path in a virtual network that is affected by a change in a state of a forwarding node.

### (Seventh Mode)

### (Refer to the control device according to the second aspect described above.)

### (Eighth Mode)

With respect to the control device according to the seventh mode, a control device further comprising a forwarding path information storage unit that stores connection relationships of physical interfaces of respective forwarding nodes in a forwarding path configured by the forwarding nodes; wherein a forwarding path including a physical interface of a forwarding node in which a change in a state has occurred is retrieved by referring to the forwarding path information storage unit, and a virtual network corresponding to the retrieved forwarding path is identified by referring to the virtual network path information storage unit.

### (Ninth Mode)

With respect to the control device according to the seventh or eighth mode, a control device further comprising: a physical topology information storage unit that stores physical topology information representing connection relationships of the forwarding nodes; and a path control unit that calculates a path between any forwarding nodes by referring to the physical topology information; wherein the path control unit updates the physical topology information based on content of a change in a state received from the forwarding nodes, in addition to re-calculating a forwarding path configured by the forwarding nodes based on the physical topology information after updating, and as a result of the re-calculation, in a case where a change has occurred in a forwarding path configured by the forwarding nodes, causes the virtual network control unit to identify the virtual network.

### (Tenth Mode)

With respect to the control device according to the ninth mode, a control device further comprising: a virtual network identification information storage unit that associates the plurality of forwarding nodes and physical interfaces thereof, and virtual nodes in a virtual network and virtual interfaces thereof; wherein the virtual network control unit refers to the virtual network identification information storage unit when communication occurs in the virtual network, to obtain forwarding nodes corresponding to a start point and an end point of the communication, and physical interfaces thereof, respectively; and a path created using the forwarding nodes corresponding to the start point and the end point of the communication and the physical interfaces thereof is associated with the virtual network in which the communication has occurred, to be registered in the virtual network path information storage unit.

### (Eleventh Mode)

With respect to the control device according to the seventh to tenth modes, a control device wherein the virtual network control unit deletes an entry in question from the virtual network path information storage unit, at an occasion when communication is completed or when a prescribed time has elapsed.

### (Twelfth Mode)

With respect to the control device according to the seventh to eleventh modes, a control device wherein a correspondence relationship between a path in a virtual network and a forwarding path configured by the forwarding nodes is stored in the virtual network path information storage unit, and the virtual network control unit identifies a path in a virtual network that is affected by a change in a state of a forwarding node.

### (Thirteenth Mode)

### (Refer to the method of managing a virtual network according to the third aspect described above.)

### (Fourteenth Mode)

With respect to the method of managing a virtual network according to the thirteenth mode, a method of managing a virtual network further including a step where the control device retrieves a forwarding path including a physical interface of a forwarding node in which a change in a state has occurred, by referring to a forwarding path information storage unit that stores connection relationships of physical interfaces of respective forwarding nodes in a forwarding path configured by the forwarding nodes, wherein a virtual network corresponding to the retrieved forwarding path is identified.

### (Fifteenth Mode)

With respect to the method of managing a virtual network according to the thirteenth or fourteenth mode, a method of managing a virtual network further including steps where the control device updates physical topology information representing connection relationships of the forwarding nodes stored in a prescribed storage device, based on content of a change in a state received from the forwarding nodes, and re-calculates a forwarding path configured by the forwarding nodes based on the physical topology information after updating, wherein as a result of the re-calculation, in a case where a change has occurred in a forwarding path configured by the forwarding nodes, a virtual network that is affected by a change in a state of the forwarding node is identified.

### (Sixteenth Mode)

With respect to the method of managing a virtual network according to the thirteenth to fifteenth modes, a method of managing a virtual network including steps wherein, when communication in the virtual network has occurred, the control device respectively obtains forwarding nodes corresponding to a start point and an end point of the communication and physical interfaces thereof, by referring to correspondence relationships of the plurality of forwarding nodes stored in a prescribed storage unit and physical interfaces thereof, and virtual nodes in a virtual network and virtual interfaces thereof; creates a path using the forwarding nodes corresponding to the start point and the end point of the communication and the physical interfaces thereof; and associates the created path with the virtual network where the communication has occurred, to be registered in the virtual network path information storage unit.

### (Seventeenth Mode)

With respect to the method of managing a virtual network according to the thirteenth to sixteenth modes, a method of managing a virtual network further including a step of deleting an entry in question from the virtual network path information storage unit, at an occasion when the communication is completed or a prescribed time has elapsed.

### (Eighteenth Mode)

With respect to the method of managing a virtual network according to the thirteenth to seventeenth modes, a method of managing a virtual network wherein a correspondence relationship of a path in the virtual network and a forwarding path configured by the forwarding nodes is stored in the virtual network path information storage unit, and a path in the virtual network is identified in addition to a virtual network that is affected by a change in a state of a forwarding node.

### (Nineteenth Mode)

### (Refer to the program according to the fourth aspect described above.)

### REFERENCE SIGNS LIST

- 10: virtual router
- 11: virtual load balancer
- 12: virtual layer 2 switch
- 13, 14: virtual server
- 20 to 24: forwarding node
- 30, 30a: control device
- 31, 31a: storage device
- 201: message processing unit
- 202: flow table
- 203: packet processing unit
- 301: virtual network control unit
- 302: path control unit
- 303: forwarding node control unit
- 311: virtual network configuration information storage unit
- 312: virtual network identification information storage unit
- 313: virtual network path information storage unit
- 314: physical topology information storage unit
- 315: forwarding path information storage unit
- 316: forwarding node information storage unit

## Claims

1. An information system, comprising:
a plurality of forwarding nodes having a packet processing unit that performs processing of a received packet using a processing rule conforming to said received packet; and
a control device that causes said plurality of forwarding nodes to operate as a virtual network by setting a processing rule in said forwarding nodes; wherein
the control device comprises:
a virtual network path information storage unit that stores a correspondence relationship between said virtual network and a forwarding path configured by said forwarding nodes; and
a virtual network control unit that identifies a virtual network that is affected by a change in a state of any forwarding node among said plurality of forwarding nodes, by referring to said virtual network path information storage unit.

2. The information system according to claim 1, wherein
the control device further comprises a forwarding path information storage unit that stores a connection relationship of a physical interface of each forwarding node in a forwarding path configured by said forwarding nodes; and
the virtual network control unit retrieves a forwarding path including a physical interface of a forwarding node where a change in a state has occurred, by referring to said forwarding path information storage unit, and identifies a virtual network corresponding to said retrieved forwarding path, by referring to said virtual network path information storage unit.

3. The information system according to claim 1 or 2, wherein
the control device further comprises:
a physical topology information storage unit that stores physical topology information representing connection relationships of said forwarding nodes; and
a path control unit that calculates a path between any forwarding nodes, by referring to said physical topology information; and wherein
the path control unit updates said physical topology information based on content of a change in a state received from said forwarding nodes, in addition to re-calculating a forwarding path configured by said forwarding nodes based on said physical topology information after updating, and as a result of said re-calculation, in a case where a change has occurred in a forwarding path configured by said forwarding nodes, causes said virtual network control unit to identify said virtual network.

4. The information system according to claim 3, wherein
the control device further comprises a virtual network identification information storage unit that associates said plurality of forwarding nodes and physical interfaces thereof, and virtual nodes in a virtual network and virtual interfaces thereof; and
the virtual network control unit refers to said virtual network identification information storage unit when communication occurs in said virtual network, to obtain forwarding nodes corresponding to a start point and an end point of said communication, and physical interfaces thereof, respectively; and
a path created using said forwarding nodes corresponding to said start point and said end point of said communication and said physical interfaces thereof, is associated with said virtual network in which said communication has occurred, to be registered in said virtual network path information storage unit.

5. The information system according to any one of claims 1 to 4, wherein said virtual network control unit deletes an entry in question from said virtual network path information storage unit, at an occasion when communication is completed or when a prescribed time has elapsed.

6. The information system according to any one of claims 1 to 5, wherein a correspondence relationship between a path in a virtual network and a forwarding path configured by said forwarding nodes is stored in said virtual network path information storage unit, and
said virtual network control unit identifies a path in a virtual network that is affected by a change in a state of a forwarding node.

7. A control device, connected to a plurality of forwarding nodes comprising a packet processing unit that performs processing of a received packet using a processing rule conforming to said received packet, said control device comprising:
a virtual network control unit that causes said plurality of forwarding nodes to operate as a virtual network, by setting a processing rule in said forwarding nodes; and
a virtual network path information storage unit that stores a correspondence relationship between a forwarding path configured by said forwarding nodes and said virtual network; wherein
a virtual network that is affected by a change in a state of any forwarding node among said plurality of forwarding nodes is identified by referring to said virtual network path information storage unit.

8. The control device according to claim 7, further comprising a forwarding path information storage unit that stores connection relationships of physical interfaces of respective forwarding nodes in a forwarding path configured by said forwarding nodes; wherein
a forwarding path including a physical interface of a forwarding node in which a change in a state has occurred is retrieved by referring to said forwarding path information storage unit, and
a virtual network corresponding to said retrieved forwarding path is identified by referring to said virtual network path information storage unit.

9. The control device according to claim 7 or 8, further comprising:
a physical topology information storage unit that stores physical topology information representing connection relationships of said forwarding nodes; and
a path control unit that calculates a path between any forwarding nodes by referring to said physical topology information; wherein
the path control unit updates said physical topology information based on content of a change in a state received from said forwarding nodes, in addition to re-calculating a forwarding path configured by said forwarding nodes based on said physical topology information after updating, and as a result of said re-calculation, in a case where a change has occurred in a forwarding path configured by said forwarding nodes, causes said virtual network control unit to identify said virtual network.

10. The control device according to claim 9, further comprising:
a virtual network identification information storage unit that associates said plurality of forwarding nodes and physical interfaces thereof, and virtual nodes in a virtual network and virtual interfaces thereof; wherein
the virtual network control unit refers to said virtual network identification information storage unit when communication occurs in said virtual network, to obtain forwarding nodes corresponding to a start point and an end point of said communication, and physical interfaces thereof, respectively; and
a path created using said forwarding nodes corresponding to said start point and said end point of said communication and said physical interfaces thereof, is associated with said virtual network in which said communication has occurred, to be registered in said virtual network path information storage unit.

11. The control device according to any one of claims 7 to 10, wherein said virtual network control unit deletes an entry in question from said virtual network path information storage unit, at an occasion when communication is completed or when a prescribed time has elapsed.

12. The control device according to any one of claims 7 to 11, wherein a correspondence relationship between a path in a virtual network and a forwarding path configured by said forwarding nodes is stored in said virtual network path information storage unit, and
said virtual network control unit identifies a path in a virtual network that is affected by a change in a state of a forwarding node.

13. A method of managing a virtual network, wherein a control device, connected to a plurality of forwarding nodes having a packet processing unit that performs processing of a received packet using a processing rule conforming to said received packet, and having a virtual network path information storage unit that stores a correspondence relationship between a virtual network realized by setting a processing rule in said forwarding nodes and a forwarding path configured by said forwarding nodes,
wherein the control device comprises performing:
a step of receiving a notification of a change in a state of a forwarding node in question from any forwarding node among said plurality of forwarding nodes, and
a step of identifying a virtual network that is affected by a change in a state of said forwarding node, by referring to said virtual network path information storage unit.

14. The method of managing a virtual network according to claim 13, further comprising:
a step that said control device retrieves a forwarding path including a physical interface of a forwarding node in which a change in a state has occurred, by referring to a forwarding path information storage unit that stores connection relationships of physical interfaces of respective forwarding nodes in a forwarding path configured by said forwarding nodes, wherein
a virtual network corresponding to said retrieved forwarding path is identified.

15. The method of managing a virtual network according to claim 13 or 14, wherein said control device performs the steps comprising:
updating physical topology information representing connection relationships of said forwarding nodes stored in a prescribed storage device, based on content of a change in a state received from said forwarding nodes, and
re-calculating a forwarding path configured by said forwarding nodes based on said physical topology information after updating, wherein
as a result of said re-calculation, in a case where a change has occurred in a forwarding path configured by said forwarding nodes, a virtual network that is affected by a change in a state of said forwarding node is identified.

16. The method of managing a virtual network according to any one of claims 13 to 15, wherein, when communication in said virtual network has occurred, said control device comprises the steps of:
obtaining forwarding nodes corresponding to a start point and an end point of said communication and physical interfaces thereof, respectively, by referring to correspondence relationships of said plurality of forwarding nodes stored in a prescribed storage unit and physical interfaces thereof, and virtual nodes in a virtual network and virtual interfaces thereof;
creating a path using said forwarding nodes corresponding to said start point and said end point of said communication and said physical interfaces thereof; and
associating said created path with said virtual network where said communication has occurred, to be registered in said virtual network path information storage unit.

17. The method of managing a virtual network according to any one of claims 13 to 16, further comprising: a step of deleting an entry in question from said virtual network path information storage unit, at an occasion when said communication is completed or a prescribed time has elapsed.

18. The method of managing a virtual network according to any one of claims 13 to 17, wherein
a correspondence relationship of a path in a virtual network and a forwarding path configured by said forwarding nodes is stored in said virtual network path information storage unit, and
a path in said virtual network is identified, in addition to a virtual network that is affected by a change in a state of a forwarding node.

19. A program, that executes on a computer configuring a control device, said control device being connected to a plurality of forwarding nodes comprising a packet processing unit that performs processing of a received packet using a processing rule conforming to said received packet; and
said control device comprising a virtual network path information storage unit that stores a correspondence relationship of a virtual network realized by setting a processing rule in said forwarding nodes and a forwarding path configured by said forwarding nodes, said program executing:
a process of receiving a notification of a change in a state of a forwarding node in question from any forwarding node among said plurality of forwarding nodes; and
a process of identifying a virtual network that is affected by a change in a state of said forwarding node, by referring to said virtual network path information storage unit.
